# EUROPEAN PATENT SPECIFICATION

(11) **EP 1 362 387 B1**
(45) Date of publication and mention of the grant of the patent: **04.03.2009**
(21) Application number: 02707555.5
(22) Date of filing: 24.01.2002
(51) Int. Cl.: H01Q 3/00, H01Q 21/00, H04B 1/38, H04B 15/00, H04M 1/00, H01Q 3/32, H01Q 1/24, H01Q 21/08

(54) **CELLULAR BASE STATION ANTENNA**
ANTENNE EINER ZELLULAREN BASISSTATION
ANTENNE DE STATION DE BASE CELLULAIRE

(30) Priority: 19.02.2001 US 788790
(43) Date of publication of application: 19.11.2003
(73) Proprietor: Andrew Corporation, Orland Park Illinois 60462 (US)
(72) Inventor: ZIMMERMAN, Martin, L., Chicago, IL 60614 (US); PASKE, Jamie, Darien, IL 60581 (US); GIACOBAZZI, Jim, Bloomingdale, IL 60108 (US); LINEHAN, Kevin, E., Justice, IL 60458 (US)
(74) Representative: Bohest AG
(86) International application number: PCT/US2002/001993
(87) International publication number: WO 2002/067374

(56) References cited:
- EP-A- 0 575 808
- EP-A1- 0 860 890
- WO-A1-95/10862
- WO-A1-96/14670
- US-A- 4 451 699
- US-A- 5 659 886
- US-A- 5 832 365
- US-A- 5 917 455
- PATENT ABSTRACTS OF JAPAN vol. 017, no. 484 (E-1426), 2 September 1993 (1993-09-02) & JP 05 121915 A (SUMITOMO ELECTRIC IND LTD), 18 May 1993 (1993-05-18)

## Description

The present invention relates to a cellular base station antenna.

In many passive antenna assemblies, it is often desired to be able to adjust a radiation pattern of the antenna assembly after the antenna assembly has been installed on a tower. The need may arise due to a number of factors, including new construction, which may create obstacles, vegetation growth, or other changes in the surrounding environment. It may also be desired to alter the radiation pattern due to performance studies or to alter the shape of the area the antenna covers.

There are various ways that the radiation pattern may be altered. One method is to physically change the location of the antenna assembly. Once the assembly has been installed on a tower, however, this becomes difficult. It is also possible to change the azimuth and elevation of the individual antennas, but such a method is expensive when applied to several antennas. Also, the mechanical device required to adjust the azimuth and elevation may interfere with the mechanical antenna mount.

Another method that has been utilized to adjust the radiation pattern of a number of antennas grouped onto one antenna assembly is to alter the phase angle of the individual antennas. By altering the phase angle of the individual antennas, a main beam (which causes the radiation pattern) is tilted relative to the surface of the earth. The antennas are grouped into a first group, a second group, and a third group. All three groups are disposed along a panel of the antenna assembly. A phase adjuster is disposed between two of the antenna groups, such that an adjustment of the phase adjuster changes the radiation pattern. The phase adjuster comprises a conductor coupled with a transmission line to create a capacitor. The conductor is rotatable and moves along the transmission line, changing the location of the capacitor on the transmission line. The transmission line is coupled to an antenna which has a phase angle.

The phase angle is dependant partially on the location of the capacitor. Thus, by changing the location of the capacitor, the phase angle is changed. The phase adjuster may be coupled to a plurality of antennas and acts to adjust the phase angle of all of them.

The phase adjusters currently in use, however, have numerous drawbacks. First, the conductor is often made of brass which is expensive to etch and cut. Therefore, the conductor is usually cut in a rectangular shape. The path of the transmission line, however, is arcuate. The conductor does not cover the entire width at the capacitor, which decreases the effectiveness of the capacitance.

Another problem with current phase adjusters is the coupling of a power divider to the phase adjuster. The antenna assembly receives power from one source. Each of the three groups of antennas, however, has different power requirements. Thus, power dividers must be connected to the assembly. Currently, a power divider may be a series of cables having different impedances. Using a variety of cables makes manufacturing difficult since the cables have to be soldered together. Also, since manual work is required, the chances of an error occurring is increased. Another method of dividing the power is to create a power divider on a PC board and then cable the power divider to the phase adjuster. Although this decreases some costs, it still requires the extensive use of cabling, which is a disadvantage.

A third problem is caused by the use of cable lines having different lengths to connect an antenna to the appropriate output from the phase adjuster. Each antenna has a different default phase angle when the phase adjuster is set to zero. The default phase angle is a function of the cable length coupled with the length of the transmission line. To achieve the differing default phase angles, cables of varying lengths are attached to different antennas. Although this only creates a slight increase in manufacturing costs since cables of varying lengths must be purchased, it greatly increases the likelihood of error during installation. In numerous antenna assemblies, the cable lengths only differ by an inch or less. During assembly, if a cable is not properly marked, it may be difficult for the person doing the assembly to tell the difference between the different sizes of cable.

To move the phase adjuster, an actuator is located on a side of the panel and may include a small knob or rotatable disc for manually changing the phase adjuster. Thus, whenever the radiation pattern needs to be adjusted, a person must climb the tower and up the side of the panel to the phase adjuster. This is a difficult and time consuming process. Also, it is only possible to move the actuator manually, requiring the exertion of physical labor. In addition, it is a dangerous activity since the antennas are located on a tower and it is possible for a person to fall or otherwise become injured in the climbing process.

The aforementioned problems are overcome by the invention as defined in the independent patent claims. Advantageous embodiments of the invention are defined by the dependent patent claims.

The advantages of the invention will become apparent upon reading the following detailed description and upon reference to the drawings, in which:
- FIG. 1: is a schematic of an antenna assembly of the present invention,
- FIG. 2: is a schematic view of a phase adjuster assembly according to one embodiment of the present invention,
- FIG. 3: is perspective side view of a panel and the phase adjuster assembly according to one embodiment of the present invention,
- FIG. 4: is an enlarged view of section B shown in FIG. 3,
- FIG. 5: is an enlarged view of section A shown in FIG. 3,
- FIG. 6a: is a front view of a bushing mount according to one embodiment of the present invention,
- FIG. 6b: is an end view of a bushing mount according to one embodiment of the present invention,
- FIG. 6c: is a side view of a bushing mount according to one embodiment of the present invention,
- FIG. 7: is an exploded perspective view of an actuator rod according to one embodiment of the present invention,
- FIG. 8: is a perspective view of a compression nut according to one embodiment of the present invention,
- FIG. 8A: is a perspective view of an actuator rod and an electrical actuator having a ground-based controller according to one embodiment of the present invention,
and
- FIG. 9: is a perspective view of an actuator rod and an electrical actuator according to one embodiment of the present invention.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

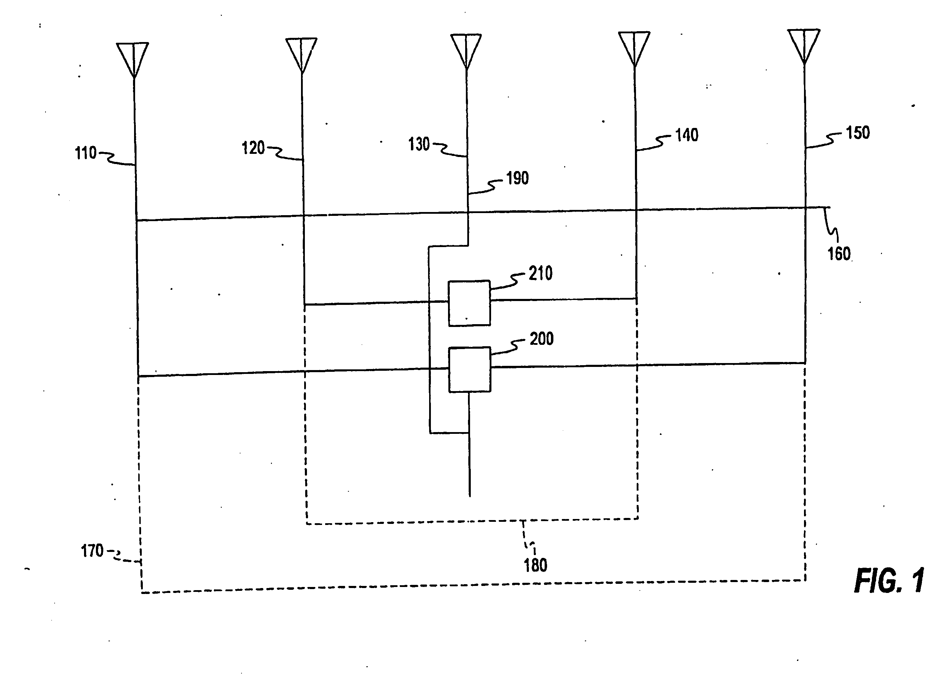

FIG. 1 is a side view of an antenna assembly 100 of the present invention. The antenna assembly 100 is comprised of a plurality of antennas 110, 120, 130, 140, 150 disposed along a panel 160. The antennas 110, 120, 130, 140, 150 are grouped into a first group 170, a second group 180, and a third group 190.

The first antenna 110 and the fifth antenna 150 are in the first group 170. The second antenna 120 and the fourth antenna 140 are in the second group 180 and the third antenna 130 is in the third group 190.

To adjust the radiation pattern the vertical electromagnetic beam of the antenna assembly 100 must be adjusted. This is accomplished by adjusting the phase angle of the first group 170 relative to the second group 180. The first group 170, however, must be adjusted by an amount different than the amount of the second group 180. To accomplish this, a first phase adjuster 200 is attached to the first group 170, and a second phase adjuster 210 is attached to the second group 180. The adjustment amount of the second group 180 is often a function of the amount of adjustment of the first group 170. To ensure that the first and second groups 170, 180 are adjusted in the correct ratio, the second adjuster 210 may be connected to the first adjuster 200, such that an adjustment of the first adjuster causes an adjustment of the second adjuster. More particularly, the second phase adjuster 210 may be connected to the first phase adjuster 200, such that an adjustment of the first phase adjuster 200 for a predetermined distance causes the second phase adjuster 210 to move proportional to the distance.

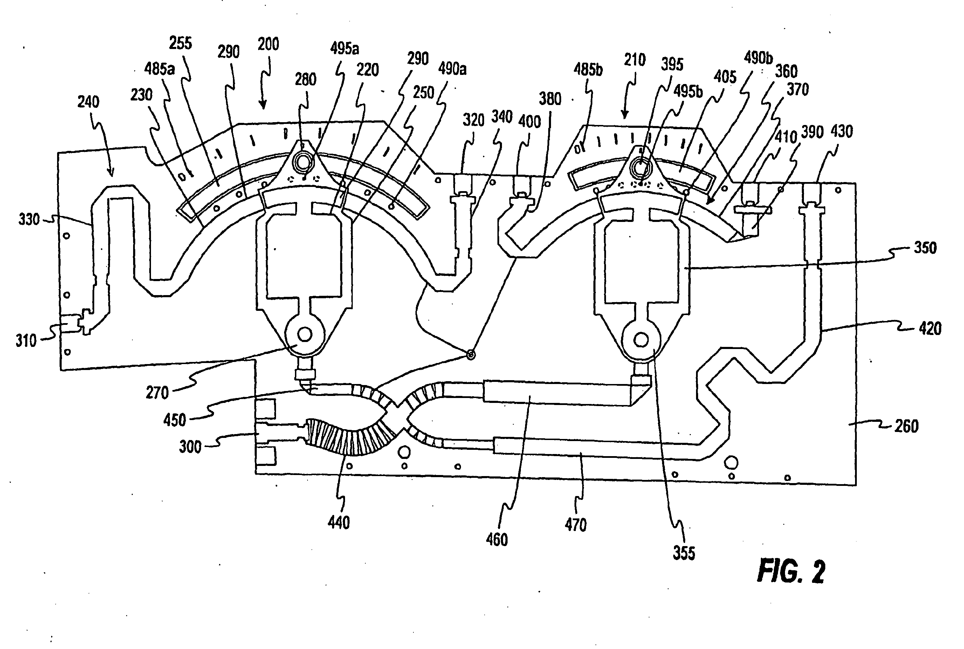

FIG. 2 depicts a schematic view of a first and second phase adjusters 200, 210 respectively, adapted to adjust the vertical beam or vertical beam downtilt angle. The first phase adjuster 200 is coupled to the first antenna group 170, and the second phase adjuster 210 is coupled to the second antenna group 180. Each of the plurality of antennas 110, 120, 130, 140, 150 has a different phase angle. By adjusting the phase angles of the plurality of antennas 110, 120, 130, 140, 150, or at least of the first and second groups 170, 180 of antennas, the vertical beam of the antenna assembly 100 is adjusted.

The first and second phase adjusters 200, 210 operate in the same fashion. For simplicity, the description will be described in more detail regarding the first phase adjuster 200. To adjust the phase angle, a conductive wiper 220 slides over a first arcuate portion 230 of a first transmission line 240. One end of the first transmission line 240 is coupled to the first antenna 110, while the other end of the first transmission line 240 is coupled to the fifth antenna 150. The conductive wiper 220 in connection with the first arcuate portion 230 acts as a capacitor. To the antennas 110, 150, the capacitor is seen as a short circuit at high frequencies. The length of the first transmission line 240 up to the point of the short circuit affects the phase angle of the antenna. As the conductive wiper 220 slides over the first arcuate portion 230, the location of the short circuit changes, changing the length of the first transmission line 240 and, thus, the phase angle of the two antennas 110, 150. Since the antennas 110, 150 are located at opposite ends of the first transmission line 240, the movement of the short circuit lengthens one transmission line as seen by one antenna while shortening the transmission line as seen by the other antenna. In other words, the transmission line has a finite length. The finite length of the transmission line is divided into a first effective length and a second effective length. The first effective length is from the first antenna 110 to the location of the wiper 220 on the transmission line 240. The second effective length is measured from the fifth antenna 150 to the location of the wiper 220 on the transmission line 240. As the wiper 220 is adjusted towards the fifth antenna 150, the first effective length is lengthened while the second effective length is shortened. As the wiper 220 is adjusted towards the first antenna 110, the first effective length is shortened while the second effective length is lengthened.

In this particular embodiment, the conductive wiper 220 is a first rotatable PC board 250 with a metallic side. The first transmission line 240 is mounted on a separate fixed PC board 260. The fixed PC board 260 and first rotatable PC board 250 act as a dielectric between the capacitor. In prior art systems, an air dielectric was sometimes used. If the conductive wiper changes its spacing relative to the first arcuate portion 230, however, the capacitor's capacitance is altered, thus, changing the impedance match of the phase shifter. If the two sections touch, the capacitance is destroyed, which adversely affects the performance of the antenna even more. Other systems use a sheet dielectric to separate the conductive wiper from the transmission line which have to be mounted using standoffs and point fasteners. The sheet, however, tends to attenuate the capacitive effect. By using the PC boards as the dielectric, the conductive wiper cannot touch the transmission line nor are the capacitive effects attenuated. Also, the manufacturing costs for making the PC board are much lower than having to mount the sheet dielectric.

The first rotatable PC board 250 is pivotally connected to the fixed PC board 260 at a joint 270, which acts as the pivot point for the first rotatable PC board 250. At another end, a joint 280, the first rotatable PC board 250 is slidably mounted in a first slot 255. A mechanical actuator (to be described) including an actuator rod 500 and a main arm 500a moves the first rotatable PC board 250 in an arcuate path over the first arcuate portion 230, thus changing the phase angle of the antennas 110, 150 as discussed above.

To increase the capacitive effects, an end 290 of the first rotatable PC board 250 that glides over the first arcuate portion 230 may be curved. The radius of curvature of the end 290 of the first rotatable PC board 250 is the same as the radius of curvature of the first arcuate portion 230. Also, both the first rotatable PC board 250 and the first arcuate portion 230 have the same center point located at the joint 270. By completely aligning with the arcuate portion 230, the capacitance is increased, increasing the effectiveness of the first phase adjuster 200.

The first transmission line 240 is electrically connected to an input 300 for receiving power. The first rotatable PC board 250 is also electrically connected to the input 300. The first transmission line 240 is coupled to the first antenna 110 (shown in FIG. 1) at a first output 310, and also to the fifth antenna 150 (shown in FIG. 1) at a fifth output 320. Each of the antennas 110, 150 has a default phase angle when the capacitor is set to zero, which is marked on FIG. 2. The default phase angle of antenna 110 is a function of the length of the first transmission line 240 and a cable line (not shown) connecting the first transmission line 240 to the antenna 110. The first transmission line 240 includes a first path 330 leading from the first arcuate portion 230 to the first output 310. The length of the first path 330 is determined by the default phase angle of the first antenna 110. The first transmission line 240 also has a second path 340 connecting the first arcuate portion 230 to the fifth output 320. The length of the second path 340 is determined by the default angle of the fifth antenna 150. By varying the length of the first path 330 and the fifth path 340, the same length cables can be used during installation to connect the antennas to the output, which makes installation easier.

The second phase adjuster 210 acts in the same way as the first phase adjuster 200. A second rotatable PC board 350 is mounted on the fixed PC board 260 and is electrically coupled to the input 300. The second rotatable PC board 350 is rotatable around a joint 355, which is also where the second rotatable PC board 350 is connected to the fixed PC board 260. A second transmission line 360 having a second arcuate portion 370, a first path 380, and a second path 390 is also electrically connected to the input 300. The second rotatable PC board 350 glides over the second arcuate portion 370 to create the capacitor. The second rotatable PC board 350 is moved by mechanical actuator comprising actuator rod 500 and main arm 500a. Main arm 500a is connected through a linkage to be described to the board 350 at a joint 395 located in a second slot 405 in the fixed PC board 260. The first path 380 of the second transmission line 360 is connected to a second output 400, which is coupled to the second antenna 120 (FIG. 1), while the second path 390 of the second transmission line 360 is connected to a fourth output 410, which is coupled to the fourth antenna 140. As with the first phase adjuster 200, the lengths of the first and second paths 380, 390 are adjusted to create the proper default phase angle.

Also connected to the input 300 is a third transmission line 420, which is coupled to a third output 430, which is connected to the third antenna 130. The third transmission line 420 is of a length to create the proper default phase angle. Since all of the individual paths 330, 340, 380, 390, 420 of the various transmission lines 240, 360, 420 are adjusted to create the proper default phase angle, the same length cable can be used to connect the antennas 110, 120, 130, 140, 150 to their respective outputs 310, 400, 430, 410, 320. This not only makes manufacturing easier, it also eliminates the possibility of error during installation of connecting the wrong length cable to the output.

The input 300 is connected to a conductive strip 440 which acts as a power divider and bleeds off power to the first and second phase adjusters 200, 210 and the third transmission line 420. The conductive strip 440 has an established impedance. The impedance of the strip 440 is a function of the width of the strip 440. By changing the width of the conductive strip 440, the impedance and, thus, the power is changed. In the present invention, the conductive strip 440 branches into a first strip 450, a second strip 460, and a third strip 470. The first strip 450 transfers power from the conductive strip 440 to the first phase adjuster 200. The second strip 460 transfers power from the conductive strip 440 to the second phase adjuster 210, and the third strip 470 transfers power from the conductive strip 440 to the third transmission line 420. The width of each of the first, second, and third strips 450, 460, 470 is manufactured to draw the correct amount of power from the conductive strip (or power divider) 440. By using a power divider on the fixed PC board 260, excess cables are eliminated, which decreases cost and also increases the reliability of the antenna assembly 100. In another embodiment of the present invention, a conductive strip can be included to divide power on the first and second transmission lines 240, 360 along the arcuate portions 230, 370.

It is sometimes desirable to lock the first and second phase adjusters in a permanent position. In current systems, a phase adjuster was locked into position at the time of manufacture since the phase adjuster does not include markings or the like. In one embodiment of the present invention, however, the fixed PC board 260 includes a first set of markers 485a over the first slot 255 and a second set of markers 485b over the second slot 405. The sets of markers 485a, 485b provide a user with a method for viewing the phase angle settings of the first and second phase adjusters 200, 210. A locking mechanism is included to lock the first and second rotatable PC boards 250, 350 in a set position. In one embodiment, a series of through holes 490a, 490b may also be included on the fixed PC board 260 and align with through holes 495a, 495b on the first and second rotatable PC boards 250, 350. A screw (not shown) may be used to lock the first or second first rotatable PC board 250, 350 to the fixed PC board 260. The use of markings and a lock system is a great improvement because the fixed PC board 260 can be assembled to the first and second phase adjusters 200, 210 without knowing if the phase angles need to be locked. Thus, this device may be manufactured prior to a purchase order being received. Once a purchase order is made, the markings and lock system can be used to lock the first and second phase adjusters 200, 210 in place, if so desired.

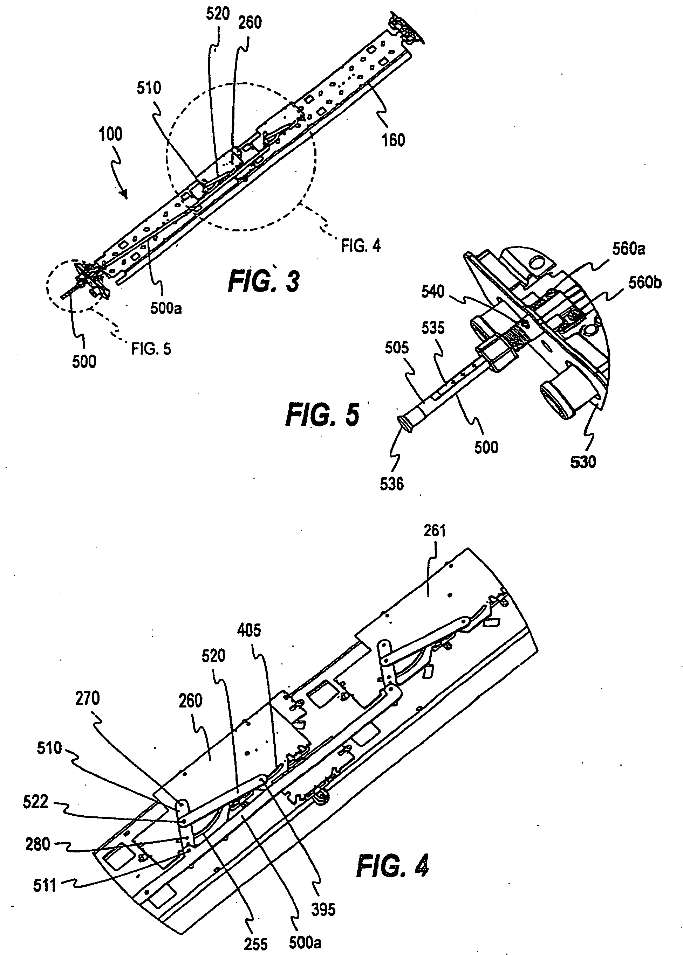

Turning now to FIGS. 2-4, FIG. 2 depicts a front side of the fixed PC board 260. FIG. 3 depicts a perspective view of a side of the panel 160 of the antenna assembly 100 and a back side of the fixed PC board 260. FIG. 4 is an enlarged detail of FIG. 3. In FIGS. 3 and 4, two similar PC boards 260, 261 are shown, each having a pair of first and second phase adjusters 200, 210. Botch pairs operate in the same fashion, and are only illustrated to demonstrate that a plurality of PC boards 260, 261 may be mounted on a single panel both being coupled to the same mechanical actuator (rod 500 and main arm 500a). As discussed above, the first phase adjuster 200 comprises the fixed PC board 260 with the first arcuate slot 255 cut through and the first rotatable PC board or wiper 250 (FIG. 2) on the other side of the fixed PC board 260. The second phase adjuster 210 comprises the fixed PC board 260, the second rotatable PC board or wiper 350 (FIG. 2), and the second arcuate slot 405. To cause the first and second rotatable PC boards 250, 350 to rotate, the main arm 500a is coupled to the rotatable PC boards 250, 350.

In the invention, the mechanical actuator comprises an actuator rod 500, main arm 500a and a linkage comprising a first arm 510, and a second arm 520. The main arm 500a is connected to one end of the first arm 510 at a pivot point 511. The other end of the first arm 510 is connected to the fixed PC board 260 and the first rotatable PC board 250 at the joint 270. A cross-section of this joint 270 would show there are three layers all connected, the first rotatable PC board 250, the fixed PC board 260, and the first arm 510. Since the fixed PC board 260 is stationary, the first arm 510 and the first rotatable PC board 250 also remain fixed at the joint 270. The joint 280 connects the first rotatable PC board 250 to the first arm 510 through the first slot 255 on the fixed PC board 260.

The second arm 520 is connected to the second rotatable PC board 350 through the second slot 405 at the joint 395. Thus, a movement of the second arm 520 causes the second rotatable PC board 350 to move along the second slot 405. The second arm 520 is also rotatably connected at a joint 522 to approximately midway between joint 270 and joint 280 on the first arm 510. Thus, as the first arm 510 is moved, the second arm 520 also moves. Since the second arm 520 is linked to the first arm 510 at the midpoint, as the joint 280 of the first arm 510 moves a predetermined distance, the joint 395 of the second arm 520 moves approximately half the predetermined distance. In other embodiments, the second arm 520 may be attached at different locations over the first arm 510, depending upon the desired ratio of movement between the first and second phase adjusters 200, 210.

FIG. 5 illustrates a grasping end 505 of the actuator rod 500 that extends out past a bottom 530 of the panel 160. The grasping end 505 of the actuator rod 500 is mounted on the bottom 530 of the panel 160. By extending the actuator rod 500 out through the bottom 530 of the panel 160, a person manually adjusting the mechanism only has to pull or push on the actuator rod 500, instead of having to rotate a small knob or disc located on the side of the panel 160, as done in the prior art. Also included on the grasping end 505 of the actuator rod 500 are markings 535 to indicate the amount of adjustment made by a person adjusting the mechanism, and a knob 536 is shown covering a threaded end 538 of the actuator rod 500. The markings 535 have a direct relationship to the vertical downtilt angle of the beam. For example, a zero marking on the rod correlates to a zero degree downtilt angle. Since the markings 535 are not detented, a user may adjust the downtilt angle as much or as little as needed. The downtilt angle need not be moved in degree or half degree increments. The knob 536 screws onto the threaded end 538 and enables the user to easily grasp the actuator rod 500 for movement purposes.

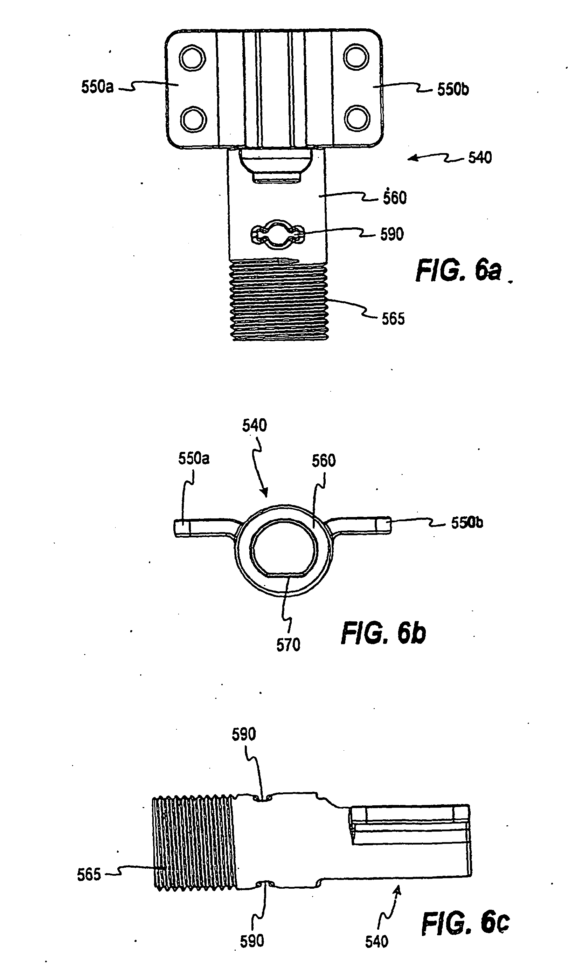

The actuator rod 500 is mounted onto the bottom 530 of the panel 160 by a bushing mount 540. The bushing mount 540 is best illustrated in FIGS. 6a-6c. The bushing mount 540 comprises a pair of brackets 550a, 550b which are attached to the panel 160. In the embodiment shown, the brackets 550a, 550b are attached via a pair of screws 560a, 560b (shown in FIG. 5). It is also contemplated, however, that other methods, such as rivets, adhesive heat staking, welding, and brazing, may be utilized.

The bushing mount 540 also has a cylindrical portion 560 adapted to receive the actuator rod 500. The cylindrical portion 560 of the bushing mount 540 allows the actuator rod 500 to be slid up and down, enabling movement. To prevent the actuator rod 500 from rotating within the cylindrical portion 560, however, a flat section 570 (FIG. 6b) is included on the inner wall of the cylindrical portion 560. One end of the cylindrical portion 560 includes a threaded portion 565 which will be described in more detail below.

As mentioned above, the grasping end 505 of the actuator rod 500 includes markings 535. The bushing mount 540 includes an indicator window 590 on opposite sides of the cylindrical portion 560 to enable a user to see the markings 535 (seen in FIG. 6c). Also, in one embodiment, the bushing mount 540 may be clear plastic so that all of the markings 535 are visible to the user.

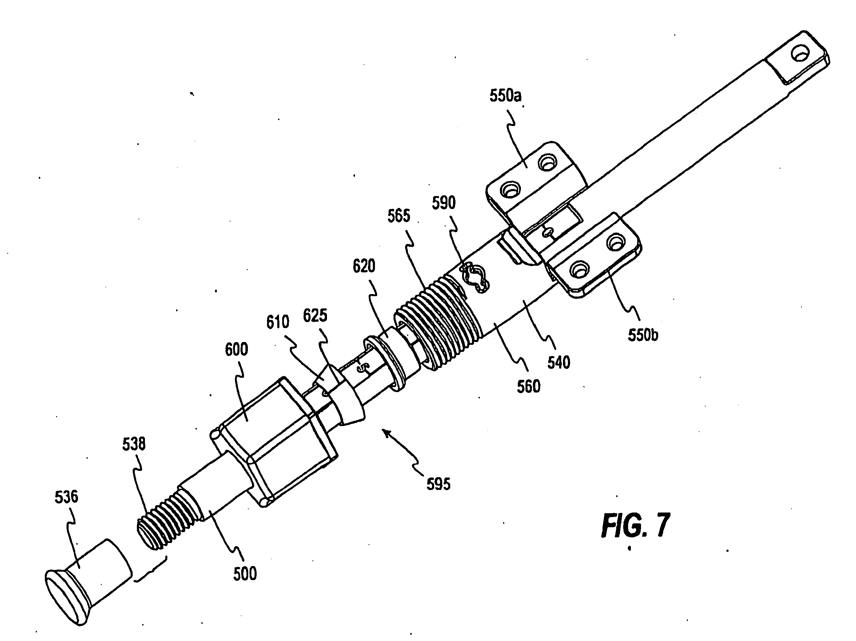

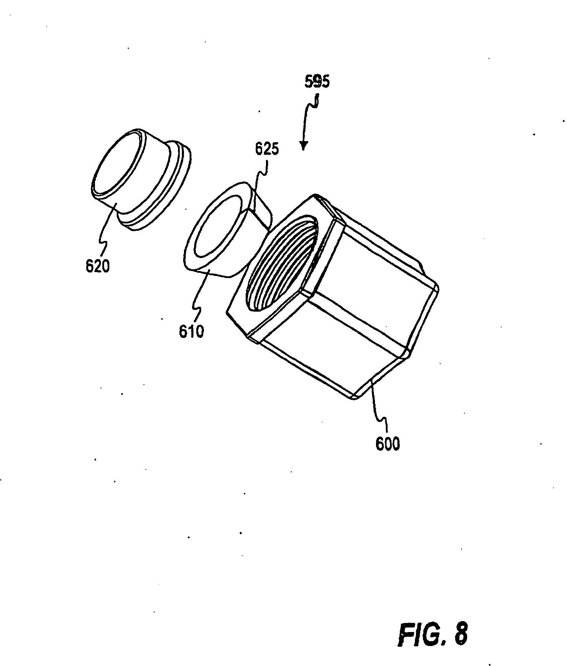

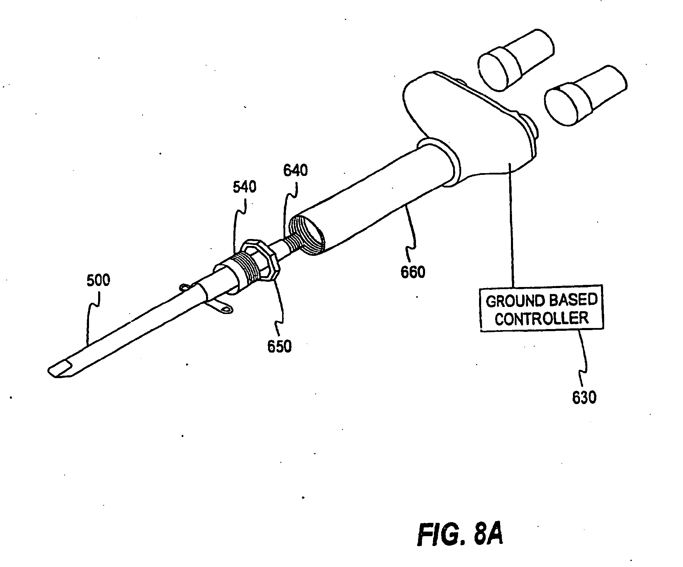

As shown in FIGS. 7 and 8, a compression nut 595 is also slid over the actuator rod 500. The compression nut 595 includes three parts, a threaded nut 600, a plastic gripper 610, and a ferrule 620. The threaded nut 600 of the compression nut 595 screws over the threaded portion 565 of the bushing mount 540 and acts to lock the actuator rod 500 in place. When the threaded nut 600 is being screwed over the threaded portion 565 of the bushing mount 540, the plastic gripper 610 and the ferrule 620 are sandwiched against the bushing mount 540. The ferrule acts as a seal against the bushing mount 540. The plastic gripper 610 contains a slit 625, which decreases in width as the threaded nut 600 is tightened against the bushing mount 540. This causes the compression nut 595 to grip the bushing mount 540, and lock the actuator rod 500 in place.

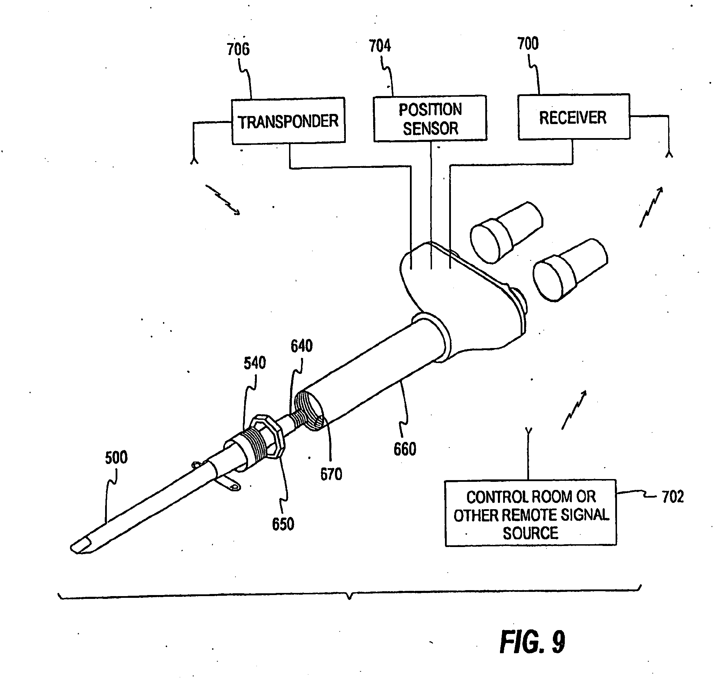

Although it is useful to have a manual actuator, it may be more desirable to have an electrical actuator that may be controlled from the ground or even remotely, for example, from a control room 630 (FIG. 8A). In FIG. 9, converting the manual actuator described above into an electrical actuator 660 is illustrated. The electrical actuator 660 comprises a piston (not shown) and a threaded barrel 670. To convert the manual actuator, the compression nut 595 and the knob 536 must first be removed. Then, a lock nut 650 is threaded onto the bushing mount 540. The threaded end 538 of the actuator rod 500 is threaded into the piston. The barrel 670 of the electrical actuator 660 is then pushed up towards the threaded portion 565 of the bushing mount 540 and threaded. Once both the piston and the threaded barrel are completely threaded onto the actuator rod 500, the lock nut 650 is tightened, locking the bushing mount 540 to the threaded barrel 670.

The electrical actuator 660 may be a step motor in a fixed position relative to the panel 160. The step motor rotates, driving a screw or shaft in a linear motion. The screw or shaft is coupled to the actuator rod 500 and, thus, moves the actuator rod 500 up and down, depending on the rotation of the step motor. It is also contemplated that the electrical actuator 660 may include a receiver 700 adapted to receive adjustment signals from a remote source 702. A sensor 704 adapted to sense the position of the actuator rod 500 may also be included. A transponder 706 may also be included to return a signal to the remote location or to a signal box which indicates the amount of adjustment made.

The present invention may, thus, be easily converted from a manual actuator to an electrical actuator depending on the needs and wishes of the user. The actuator, thus provides flexibility in use, allowing a user to purchase a manual actuator and then upgrade to an electrical actuator at a later date. The advantages to this are many. The user may not initially wish to expend the money to pay for an electrical actuator if there is rarely a need to adjust the vertical beam. As that need changes, however, the user may purchase the electrical actuator and easily convert the actuator.

## Claims

1. A cellular base station antenna comprising:
a planar panel (160) having a plurality of antenna elements (110,120,130,140,150) fixedly mounted thereon above the planar panel (160);
a signal parallel feed network operatively coupled to said antenna elements;
a variable signal phase adjuster arrangement (200,210) in said signal parallel feed network receiving signals from said parallel feed network and coupled with said antenna elements for developing differently phased signals for selective application to said plurality of antenna elements; and
a linearly reciprocable, phase-adjustment mechanical actuator (500,500a) coupled to said phase adjuster arrangement (200,210) and having a terminus (505) extending beyond a bottom edge (530) of said panel (180), said mechanical actuator being configured to be coupled to a remotely controllable electrical actuator (660) for remotely adjusting the phase adjuster arrangement and, as a consequence, the direction of the beam.

2. The antenna according to claim 1, wherein said signal phase adjuster arrangement (200,210) includes a pivotally mounted, phase-adjusting wiper (250,350) capacitively coupled in said signal parallel feed network.

3. The antenna according to claim 2, wherein said mechanical actuator (500,500a) is coupled to said wiper (250,350) and is configured to convert linear motion of said mechanical actuator (500,500a) to arcuate motion of said wiper (250,350).

4. The antenna according to any one of the preceding claims, wherein said mechanical actuator (500,500a) is adapted for conversion between manual manipulation and manipulation by the electrical actuator (660).

5. The antenna according to any one of claims 2 to 4, further including a first printed circuit board (260) which includes at least a portion of said signal parallel feed network, and wherein said wiper (250,350) is mounted on said first printed circuit board (260).

6. The antenna according to any one of the preceding claims, wherein said phase adjuster arrangement includes first (200) and second (210) phase adjusters coupled to and manipulated by said mechanical actuator (500,500a).

7. The antenna according to claim 6, wherein said first (200) and second (210) phase adjusters are mechanically coupled (522, 520, 395).

8. The antenna according to any one of the preceding claims, wherein said mechanical actuator (500,500a) includes a position lock.

9. The antenna according to any one of the preceding claims, wherein said phase adjuster arrangement (200, 210) further includes
a fixed printed circuit board (260);
a signal input (300) mounted on said fixed printed circuit board (260);
a wiper (250,350) electromagnetically coupled to said signal input (300); and
a transmission line (240,360) electromagnetically coupled to said wiper (250,350) and formed of a portion of said signal parallel feed network, wherein movement of said wiper (250,350) changes an effective length of said transmission line (240,360).

10. The antenna according to claim 9, wherein said wiper (250,350) is pivotally coupled to said signal input (300).

11. The antenna according to any one of the preceding claims, wherein said mechanical actuator (500,500a) is coupled to and mechanically adjusted by said electrical actuator (660).

12. The antenna according to claim 11, wherein said electrical actuator (660) is configured to adjust said mechanical actuator (500,500a) responsive to commands from a signal source (702) located remotely from said antenna.

13. A cellular base station antenna according to claim 11 or 12, wherein said electrical actuator (660) is positioned off said panel (160).

14. The antenna according to any one of claims 11 to 13, wherein said panel (160) is oriented vertically, and wherein said electrical actuator (660) is located below said panel (160).

15. The antenna according to any one of the preceding claims, further including a sensor (704) for sensing a position of said mechanical actuator (500,500a).

16. The antenna according to claims 12 and 15, wherein said signal source (702) is responsive to said sensor (704).

17. The antenna according to any one of the preceding claims, wherein said panel (160) includes a plurality of phase adjuster arrangements (200,210) coupled to and manipulated by a common mechanical actuator (500,500a).

18. The antenna according to any one of claims 11 to 17, wherein said electrical actuator (660) includes an electrical motor.

19. A cellular base station antenna according to claim 1, further comprising:
a transmission line (240,360) interconnecting said antenna elements; and
a phase adjustment system for varying a relative phasing of said interconnected radiators, said phase adjustment system including a printed circuit board (260) having a printed conductor forming a portion of said transmission line (240,360), and
said phase adjuster arrangement (200,210) of said signal parallel feed network;
said phase adjuster arrangement being coupled to said printed conductor and having an intermittently moveable component configured to adjust a relative signal phasing of said interconnected antenna elements between different phase values in a move-and-stop process.

20. The antenna according to claim 19, further including a moveable printed circuit board (250,350) pivotally connected to said printed circuit board (260) and having a conductive layer capacitively coupled to said printed conductor.

21. The antenna according to claim 19 or 20, wherein said phase adjustment system is mechanically manipulated by the electrical actuator (660) responsive to commands from a remote signal source (702).

22. The antenna according to claim 21, further including a mechanical actuator (500,500a) connected between said phase adjuster arrangement (200,210) and said electrical actuator (660).

23. A cellular base station antenna according to claim 1, wherein said panel (160) is an elongated panel adapted to be mounted vertically and having a front side and a back side, said antenna comprising:
a signal parallel feed network configured to supply signals to an arrangement of spaced first, second, third and fourth antenna elements (110,150,120,140) on the front side of the panel; and an electromechanical phase adjustment system, comprising:
a first mechanical phase adjuster (200) located on the back side of the panel;
said first phase adjuster (200) including a first transmission line (240) of arcuate configuration coupled at opposed ends to the first (110) and second (150) antenna elements, and a signal-conducting moveable first wiper (250) configured to wipe across said first transmission line (240) thereby shortening the signal path to one of said first (110) and second (150) antenna elements while lengthening the signal path to the other of said antenna elements;
a second mechanical phase adjuster (210) located on the back side of the panel;
said second phase adjuster (210) including a second transmission line (360) of arcuate configuration coupled at opposed ends to the third (120) and fourth (140) antenna elements, and a signal-conducting moveable second wiper (350) configured to wipe across said second transmission line (360) thereby shortening the signal path to one of said third and fourth antenna elements while lengthening the signal path to the other of said antenna elements;
a motor supported by said panel below said first and second phase adjusters (200,210);
a mechanical linkage coupling said motor to said first (250) and second (350) wipers, said linkage including an elongated member (500,500a) between said motor and said first (250) and second (350) moveable wipers and coupled to at least one pivotally mounted wiper arm (510,520) supporting at least one of said first (250) and second (350) moveable wipers such that activation of said motor causes said elongated member (500,500a) to move in a lengthwise direction along said panel, causes said first (250) and second (350) wipers to simultaneously wipe arcuately across said transmission lines (240,360), and causes the fixed elevation of the beam to change in relation to the direction and magnitude of the movement of said elongated member (500,500a); and a beam elevation control system, comprising:
a motor controller (630) located remotely from said antenna and coupled to said motor;
said motor controller (630) being configured to transmit beam elevation commands to said motor and to thereby make adjustments in beam elevation.

24. The antenna according to claim 23 wherein one of said first (250) and second (350) wipers moves twice as far as the other of said wipers when said elongated member (500,500a) is moved.

25. The antenna according to claim 23 or 24, further including a link (520) interconnecting said first (250) and second (350) wipers.

26. The antenna according to any one of claims 23 to 25, wherein said mechanical linkage converts rotary movement of the motor to linear movement of the elongated member (500,500a).

27. The antenna according to any one of claims 23 to 26, wherein said beam elevation control system includes a beam position identifier (704) to which said motor controller (630) is responsive.

28. The antenna according to any one of claims 23 to 27, wherein said elongated member (500) has a terminus near a lower edge of said panel.

29. The antenna according to claim 28 wherein said terminus of said elongated member (500) is adapted first to facilitate manual manipulation of said elongated member to adjust beam elevation, and second to facilitate connection of said motor into said antenna for remote electrical adjustment of beam elevation.

30. The antenna according to claim 28 or 29, wherein said terminus includes a threaded coupling nut (600) through which said elongated member (500) extends for connection to said motor.

31. The antenna according to any one of claims 23 to 30, wherein said elongated member (500) includes indicia (535) providing an indication of beam elevation based upon the position of the elongated member (500).

32. The antenna according to any one of claims 23 to 31, wherein said elongated member (500) is composed of plastic.

33. The antenna according to any one of claims 23 to 32, wherein said motor is adapted to be retrofitted to said panel so as to hang below said panel for easy installation.

34. The antenna according to any one of claims 23 to 33, wherein said motor is configured to be retrofitted into said electromechanical phase adjustment system.

35. A cellular base station antenna according to claim 1, wherein said mechanical actuator (500,500a) is configured first for manual adjustment of beam elevation and second for selective attachment of an electrical actuator (660) for remote electrical adjustment of beam elevation.

36. The antenna according to claim 35, wherein said mechanical actuator (500,500a) has a terminus below an edge of said panel, said terminus being configured for manual adjustment of beam elevation, and for attachment of said electrical actuator (660).

37. The antenna according to claim 36, wherein said terminus includes a threaded nut (600) with an opening which passes an elongated member (500) extending to said phase adjuster (200,210) and driven by said electrical actuator (660).

38. The antenna according to claim 37, wherein said elongated member (500) contains indicia (535) which indicate beam elevation based upon the position of the elongated member (500).

39. The antenna according to any one of claims 35 to 38, including a plurality of spaced phase adjusters, and wherein said mechanical actuator includes an elongated member (500a) which extends lengthwise along said panel and is coupled to said phase adjusters for simultaneous manual or electrical manipulation of each of them.

## Patentansprüche

1. Antenne einer zellularen Basisstation umfassend:
eine ebene Platte (160) mit einer Vielzahl von darauf befestigten oberhalb der ebenen Platte angeordneten Antennenelementen (110,120,130,140,150);
ein Signal-Parallel-Zufuhrnetz, das operativ mit den Antennenelementen gekoppelt ist;
eine variable Signalphasen-Einstelleinrichtung (200,210) im Signal-Parallel-Zufuhrnetz, die Signale von diesem Signal-Parallel-Zufuhrnetz empfängt und mit den Antennenelementen gekoppelt ist zur Erzeugung von Signalen mit unterschiedlicher Phase für die selektive Zuweisung zu der Vielzahl von Antennenelementen und
ein linear hin- und her bewegbares, mechanisches Phaseneinstellungs-Stellglied (500,500a), das mit der Phasen-Einstelleinrichtung (200,210) gekoppelt ist und einen sich in der Nähe des unteren Rands (530) der Platte (160) befindlichen Endpunkt (505) aufweist, wobei das mechanische Stellglied so ausgebildet ist, dass es mit einem fernbedienbaren elektrischen Stellglied (660) gekoppelt werden kann, zur Ferneinstellung der Phasen-Einstelleinrichtung und, folglich, der Strahlrichtung.

2. Antenne gemäss Anspruch 1, wobei die Signalphasen-Einstelleinrichtung (200,210) einen schwenkbar befestigten Phaseneinstell-Wischerarm (250,350) aufweist, der in dem Signal-Parallel-Zufuhrnetz kapazitiv gekoppelt ist.

3. Antenne gemäss Anspruch 2, wobei das mechanische Stellglied (500,500a) mit dem Wischerarm (250,350) gekoppelt ist und so ausgebildet ist, dass es die Linearbewegung des mechanischen Stellglieds (500,500a) in eine Bogenbewegung des Wischerarms (250,350) umsetzt.

4. Antenne gemäss einem der vorangehenden Ansprüche, wobei das mechanische Stellglied (500,500a) für einen Wechsel zwischen manueller Bedienung und einer Bedienung durch das elektrische Stellglied (660) ausgelegt ist.

5. Antenne gemäss einem der Ansprüche 2 bis 4, ferner umfassend eine erste gedruckte Schaltungsplatine (260), die mindestens einen Teil des Signal-Parallel-Zufuhrnetzes umfasst, und wobei der Wischerarm (250,350) auf der ersten gedruckten Schaltungsplatine (260) angebracht ist.

6. Antenne gemäss einem der vorangehenden Ansprüche, wobei die Phasen-Einstelleinrichtung einen ersten (200) und zweiten (210) Phaseneinsteller aufweist, die mit dem mechanischen Stellglied (500,500a) gekoppelt sind und von diesem bedient werden.

7. Antenne gemäss Anspruch 6, wobei der erste (200) und zweite (210) Phaseneinsteller mechanisch gekoppelt (522,520,395) sind.

8. Antenne gemäss einem der vorangehenden Ansprüche, wobei das mechanische Stellglied (500,500a) eine Positionsarretierung aufweist.

9. Antenne gemäss einem der vorangehenden Ansprüche, wobei die Phasen-Einstelleinrichtung (200,210) weiter aufweist
eine feststehende gedruckte Schaltungsplatine (260);
einen Signaleingang (300), der auf der feststehenden gedruckten Schaltungsplatine (260) angebracht ist;
einen Wischerarm (250,350), der mit dem Signaleingang (300) elektromagnetisch gekoppelt ist; und
eine Übertragungsleitung (240,360), die mit dem Wischerarm (250,350) elektromagnetisch gekoppelt ist und durch einen Teil des Signal-Parallel-Zufuhrnetzes gebildet wird, wobei die Bewegung des Wischerarms (250,350) eine wirksame Länge der Übertragungsleitung (240,360) verändert.

10. Antenne gemäss Anspruch 9, wobei der Wischerarm (250,350) mit dem Signaleingang (300) drehbar verbunden ist.

11. Antenne gemäss einem der vorangehenden Ansprüche, wobei das mechanische Stellglied mit dem elektrischen Stellglied (500,500a) gekoppelt ist und von diesem bedient wird.

12. Antenne gemäss Anspruch 11, wobei das elektrische Stellglied (660) so ausgebildet ist, dass es das mechanische Stellglied (500,500a) in Reaktion auf einen Befehl von einer von der Antenne entfernt angeordneten Signalquelle (702) bedient.

13. Antenne einer zellularen Basisstation gemäss Anspruch 11 oder 12, wobei das elektrische Stellglied (660) abseits der Platte (160) angeordnet ist.

14. Antenne gemäss einem der Ansprüche 11 bis 13, wobei die Platte (160) senkrecht ausgerichtet und das elektrische Stellglied (660) unterhalb der Platte (160) angeordnet ist.

15. Antenne gemäss einem der vorangehenden Ansprüche, weiterhin umfassend einen Sensor (704) zum Erfassen der Position des mechanischen Stellglieds (500,500a).

16. Antenne gemäss den Ansprüchen 12 und 15, wobei die Signalquelle (702) auf den Sensor (704) reagiert.

17. Antenne gemäss einem der vorangehenden Ansprüche, wobei die Platte (160) eine Vielzahl von Phasen-Einstelleinrichtungen (200,210) umfasst, die mit einem gemeinsamen mechanischen Stellglied (500,500a) gekoppelt sind und von diesem bedient werden.

18. Antenne gemäss einem der Ansprüche 11 bis 17, wobei das elektrische Stellglied (660) einen Elektromotor umfasst.

19. Antenne einer zellularen Basisstation gemäss Anspruch 1, weiter umfassend:
eine Übertragungsleitung (240,360), die die Antennenelemente verbindet; und
ein Phasen-Einstellsystem zum Verändern einer relativen Phasenbeziehung der miteinander verbundenen Strahler, wobei das Phasen-Einstellsystem enthält
eine gedruckte Schaltungsplatine (260) mit einem gedruckten Leiter, der einen Abschnitt der Übertragungsleitung (240,360) bildet, und die Phasen-Einstelleinrichtung (200,210) des Signal-Parallel-Zufuhrnetzes;
wobei die Phasen-Einstelleinrichtung mit dem gedruckten Leiter verbunden ist und ein intermittierend bewegliches Bauteil aufweist, das dafür ausgebildet ist, eine relative Signalphasenbeziehung der miteinander verbundenen Antennenelemente zwischen verschiedenen Phasenwerten in einem Bewegungs- und Halteprozess einzustellen.

20. Antenne gemäss Anspruch 19, weiter umfassend eine bewegliche gedruckte Schaltungsplatine (250,350), die mit der gedruckten Schaltungsplatine (260) drehbar verbunden ist und eine leitende Schicht aufweist, die mit dem gedruckten Leiter kapazitiv gekoppelt ist.

21. Antenne gemäss Anspruch 19 oder 20, wobei das Phasen-Einstellsystem durch das elektrische Stellglied (660) in Reaktion auf Befehle von einer entfernten Signalquelle (702) mechanisch bedient wird.

22. Antenne gemäss Anspruch 21, weiter umfassend ein mechanisches Stellglied (500,500a), das zwischen die Phasen-Einstelleinrichtung (200,210) und das elektrischen Stellglied (660) geschaltet ist.

23. Antenne einer zellularen Basisstation gemäss Anspruch 1, wobei die Platte (160) eine längliche Platte ist, die für eine vertikale Befestigung ausgebildet ist und eine Vorderseite und eine Rückseite aufweist, wobei die Antenne umfasst:
ein Signal-Parallel-Zufuhrnetz, dass dazu ausgebildet ist, Signale für eine Anordnung aus beabstandeten ersten, zweiten, dritten und vierten Antennenelementen (110,150,120,140) auf der Vorderseite der Platte bereitzustellen; und
ein elektromechanisches Phasen-Einstellsystem, umfassend:
einen ersten mechanischen Phasen-Einsteller (200) auf der Rückseite der Platte;
wobei dieser erste Phasen-Einsteller (200) eine erste bogenförmige Übertragungsleitung (240) umfasst, die an den gegenüberliegenden Enden mit dem ersten (110) und dem zweiten (150) Antennenelement verbunden ist, und einen signalleitenden, beweglichen ersten Wischerarm, (250) der so ausgebildet ist, dass er über die erste Übertragungsleitung (240) streicht und dabei den Signalweg zu einem der ersten (110) und zweiten (150) Antennenelemente verkürzt, während er den Signalweg zum anderen dieser Antennenelemente verlängert;
einen zweiten mechanischen Phasen-Einsteller (210) auf der Rückseite der Platte;
wobei dieser zweite Phasen-Einsteller (210) eine zweite bogenförmige Übertragungsleitung (360) umfasst, die an den gegenüberliegenden Enden mit dem dritten (120) und dem vierten (140) Antennenelement verbunden ist, und einen signalleitenden, beweglichen zweiten Wischerarm (350), der so ausgebildet ist, dass er über die zweite Übertragungsleitung (360) streicht und dabei den Signalweg zu einem der dritten (120) und vierten (140) Antennenelemente verkürzt, während er den Signalweg zum anderen dieser Antennenelemente verlängert;
ein Motor, der auf der Platte unterhalb der ersten und zweiten Phasen-Einsteller (200,210) befestigt ist;
eine mechanische Verbindung, die den Motor mit dem ersten (250) und zweiten (350) beweglichen Wischerarm verbindet, wobei diese Verbindung ein längliches Element (500,500a) zwischen dem Motor und dem ersten (250) und zweiten (350) beweglichen Wischerarm umfasst und mindestens einen drehbar befestigten Wischerarm (510,520) der ersten (250) und zweiten (350) beweglichen Wischerarme so hält, dass eine Aktivierung des Motors das längliche Element (500,500a) in Längsrichtung entlang der Platte bewegt, den ersten (250) und zweiten (350) Wischerarm gleichzeitig bogenförmig über die Übertragungsleitungen (240,360) streichen lässt, und die feststehende Höhe des Strahls entsprechend der Richtung und dem Betrag der Bewegung des länglichen Elements (500,500a) ändert; und
eine Strahlhöhen-Steuerungseinrichtung, umfassend:
eine Motorsteuerung (630), die mit dem Motor verbunden und entfernt von der Antenne angeordnet ist;
wobei die Motorsteuerung (630) so ausgebildet ist, dass sie Strahlhöhenbefehle zum Motor übermitteln kann und **dadurch** die Einstellung der Strahlhöhe bewirkt.

24. Antenne gemäss Anspruch 23, wobei einer der ersten (250) und zweiten (350) Wischerarme sich doppelt so weit wie der andere Wischerarm bewegt, wenn das längliche Element (500,500a) bewegt wird.

25. Antenne gemäss Anspruch 23 oder 24, weiter umfassend eine Verbindung (520), die den ersten (250) und zweiten (350) Wischerarm verbindet.

26. Antenne gemäss einem der Ansprüche 23 bis 25, wobei die mechanische Verbindung die Drehbewegung des Motors in eine Linearbewegung des länglichen Elements (500,500a) umsetzt.

27. Antenne gemäss einem der Ansprüche 23 bis 26, wobei die Strahlhöhen-Steuerungseinrichtung eine Strahlhöhen-Bestimmungseinrichtung (704) umfasst, auf die die Motorsteuerung (630) reagiert.

28. Antenne gemäss einem der Ansprüche 23 bis 27, wobei das längliche Element (500) einen sich in der Nähe des unteren Rands der Platte befindlichen Endpunkt aufweist.

29. Antenne gemäss Anspruch 28, wobei der Endpunkt des länglichen Elements (500) dafür ausgelegt ist erstens die manuelle Bedienung des länglichen Elements zur Strahlhöheneinstellung zu ermöglichen, und zweitens die Verbindung des Motors mit der Antenne zur ferngesteuerten elektrischen Strahlhöheneinstellung zu ermöglichen.

30. Antenne gemäss Anspruch 28 oder 29, wobei der Endpunkt eine Kopplungs-Gewindemutter (600) aufweist, durch die das längliche Element (500) zur Verbindung mit dem Motor hindurchreicht.

31. Antenne gemäss einem der Ansprüche 23 bis 30, wobei das längliche Element (500) Markierungen (535) aufweist, die Angaben zur Strahlhöhe auf der Grundlage der Position des länglichen Elements (500) liefern.

32. Antenne gemäss einem der Ansprüche 23 bis 31, wobei das längliche Element (500) aus Kunststoff gefertigt ist.

33. Antenne gemäss einem der Ansprüche 23 bis 32, wobei der Motor dafür ausgelegt ist, an einer Platte nachgerüstet zu werden, so dass er für eine leichte Montage unter der Platte hängt.

34. Antenne gemäss einem der Ansprüche 23 bis 33, wobei der Motor dafür ausgelegt ist, in ein elektromechanisches Phasen-Einstellsystem nachgerüstet zu werden.

35. Antenne einer zellularen Basisstation gemäss Anspruch 1, wobei das mechanische Stellglied (500,500a) erstens für die manuelle Strahlhöheneinstellung ausgelegt ist, und zweitens für die selektive Verbindung mit einem elektrischen Stellglied (660) zur ferngesteuerten elektrischen Strahlhöheneinstellung.

36. Antenne gemäss Anspruch 35, wobei das mechanische Stellglied (500,500a) einen unterhalb des Randes der Platte befindlichen Endpunkt aufweist, wobei der Endpunkt für die manuelle Strahlhöheneinstellung und für die Verbindung mit dem elektrischen Stellglied (660) ausgebildet ist.

37. Antenne gemäss Anspruch 36, wobei der Endpunkt eine Kopplungs-Gewindemutter (600) aufweist mit einer Öffnung, durch die hindurch das längliche Element (500) sich zu dem Phasen-Einsteller (200,210) verbunden ist und durch das elektrische Stellglied (660) bewegt wird.

38. Antenne gemäss Anspruch 37, wobei das längliche Element (500) Markierungen (535) aufweist, die Angaben zur Strahlhöhe auf der Grundlage der Position des länglichen Elements (500) liefern.

39. Antenne gemäss einem der Ansprüche 35 bis 38, die eine Vielzahl von beabstandeten Phasen-Einstellern umfasst, und wobei das mechanische Stellglied ein längliches Element (500a) umfasst, das sich in Längsrichtung der Platte erstreckt und mit den Phasen-Einstellern verbunden ist zur gleichzeitigen manuellen oder elektrischen Bedienung einer jeden von ihnen.

## Revendications

1. Antenne de station de base cellulaire comprenant :
un panneau plan (160) ayant une pluralité d'éléments d'antenne (110, 120, 130, 140, 150) montés dessus de manière fixe au-dessus du panneau plan (160) ;
un réseau d'alimentation parallèle en signaux, couplé de manière opérationnelle auxdits éléments d'antenne ;
un agencement de dispositif de réglage de phase de signal variable (200, 210) dans ledit réseau d'alimentation parallèle en signaux recevant des signaux en provenance dudit réseau d'alimentation parallèle et couplé auxdits éléments d'antenne de manière à développer des signaux ayant des phases différentes pour une application sélective à ladite pluralité d'éléments d'antenne ; et
un actionneur mécanique de réglage de phase animé d'un mouvement de va-et-vient linéaire (500, 500a) couplé audit agencement de dispositif de réglage de phase (200, 210) et ayant une extrémité (505) se prolongeant au-delà d'un bord inférieur (530) dudit panneau (180), ledit actionneur mécanique étant configuré de manière à être couplé à un actionneur électrique pouvant être commandé à distance (660) afin de régler à distance l'agencement de dispositif de réglage de phase et, par conséquent, la direction du faisceau.

2. Antenne selon la revendication 1, dans laquelle ledit agencement de dispositif de réglage de phase de signal (200, 210) inclut un balai de réglage de phase, monté de manière pivotante (250, 350) et couplé de manière capacitive dans ledit réseau d'alimentation parallèle en signaux.

3. Antenne selon la revendication 2, dans laquelle ledit actionneur mécanique (500, 500a) est couplé audit balai (250, 350) et est configuré de manière à convertir un déplacement linéaire dudit actionneur mécanique (500, 500a) en un déplacement en arc de cercle dudit balai (250, 350).

4. Antenne selon l'une quelconque des revendications précédentes, dans laquelle ledit actionneur mécanique (500, 500a) est apte à une conversion entre une manoeuvre manuelle et une manoeuvre effectuée par l'actionneur électrique (660).

5. Antenne selon l'une quelconque des revendications 2 à 4, comprenant en outre un premier circuit imprimé (260) qui inclut au moins une partie dudit réseau d'alimentation parallèle en signaux, et dans laquelle ledit balai (250, 350) est monté sur ledit premier circuit imprimé (260).

6. Antenne selon l'une quelconque des revendications précédentes, dans laquelle ledit agencement de dispositif de réglage de phase inclut un premier (200) et un second (210) dispositifs de réglage de phase couplés audit, et manoeuvré par ledit, actionneur mécanique (500, 500a).

7. Antenne selon la revendication 6, dans laquelle ledit premier (200) et ledit second (210) dispositifs de réglage de phase sont couplés de manière mécanique (522, 520, 395).

8. Antenne selon l'une quelconque des revendications précédentes, dans laquelle ledit actionneur mécanique (500, 500a) inclut un verrouillage de position.

9. Antenne selon l'une quelconque des revendications précédentes, dans laquelle ledit agencement de dispositif de réglage de phase (200, 210) inclut en outre :
un circuit imprimé fixe (260) ;
une entrée de signal (300) montée sur ledit circuit imprimé fixe (260) ;
un balai (250, 350) couplé de manière électromagnétique à ladite entrée de signal (300) ; et
une ligne de transmission (240, 360) couplée de manière électromagnétique audit balai (250, 350) et constituée par une partie dudit réseau d'alimentation parallèle en signaux, dans laquelle le déplacement dudit balai (250, 350) modifie la longueur effective de ladite ligne de transmission (240, 360).

10. Antenne selon la revendication 9, dans laquelle ledit balai (250, 350) est couplé de manière pivotante à ladite entrée de signal (300).

11. Antenne selon l'une quelconque des revendications précédentes, dans laquelle ledit actionneur mécanique (500, 500a) est couplé audit, et réglé de manière mécanique par ledit, actionneur électrique (660).

12. Antenne selon la revendication 11, dans laquelle ledit actionneur électrique (660) est configuré de manière à régler ledit actionneur mécanique (500, 500a) en réponse à des commandes provenant d'une source de signaux (702) située à distance de ladite antenne.

13. Antenne de station de base cellulaire selon la revendication 11 ou la revendication 12, dans laquelle ledit actionneur électrique (660) est positionné en dehors dudit panneau (160).

14. Antenne selon l'une quelconque des revendications 11 à 13, dans laquelle ledit panneau (160) est orienté verticalement, et dans laquelle ledit actionneur électrique (660) se situe en dessous dudit panneau (160).

15. Antenne selon l'une quelconque des revendications précédentes, comprenant en outre un détecteur (704) pour détecter la position dudit actionneur mécanique (500, 500a).

16. Antenne selon les revendications 12 et 15, dans laquelle ladite la source de signaux (702) est sensible audit détecteur (704).

17. Antenne selon l'une quelconque des revendications précédentes, dans laquelle ledit panneau (160) inclut une pluralité d'agencements de dispositifs de réglage de phase (200, 210) couplés audit, et manoeuvré par ledit, actionneur mécanique commun (500, 500a).

18. Antenne selon l'une quelconque des revendications 11 à 17, dans laquelle ledit actionneur électrique (660) inclut un moteur électrique.

19. Antenne de station de base cellulaire selon la revendication 1, comprenant en outre :
une ligne de transmission (240, 360) qui interconnecte lesdits éléments d'antenne ; et
un système de réglage de phase pour faire varier une mise en phase relative desdits éléments rayonnants interconnectés, ledit système de réglage de phase comprenant un circuit imprimé (260) ayant un conducteur imprimé qui forme une partie de ladite ligne de transmission (240, 360), et
ledit agencement de dispositif de réglage de phase (200, 210) dudit réseau d'alimentation parallèle en signaux ;
ledit agencement de dispositif de réglage de phase étant couplé audit conducteur imprimé et ayant un composant mobile de manière intermittente pour régler une mise en phase de signal relative desdits éléments d'antenne interconnectés entre différentes valeurs de phase dans un processus de déplacement et d'arrêt.

20. Antenne selon la revendication 19, comprenant en outre un circuit imprimé mobile (250, 350) connecté de manière pivotante audit circuit imprimé (260) et ayant une couche conductrice couplée de manière capacitive audit conducteur imprimé.

21. Antenne selon la revendication 19 ou la revendication 20, dans laquelle ledit système de réglage de phase est manoeuvré de manière mécanique par l'actionneur électrique (660) en réponse à des commandes provenant d'une source de signaux distante (702).

22. Antenne selon la revendication 21, comprenant en outre un actionneur mécanique (500, 500a) connecté entre ledit agencement de dispositif de réglage de phase (200, 210) et ledit actionneur électrique (660).

23. Antenne de station de base cellulaire selon la revendication 1, dans laquelle ledit panneau (160) est un panneau allongé apte à être monté verticalement et ayant une face avant et une face arrière, ladite antenne comprenant :
un réseau d'alimentation parallèle en signaux configuré de manière à fournir des signaux à un agencement d'un premier, d'un deuxième, d'un troisième et d'un quatrième éléments d'antenne (110, 150, 120, 140) sur la face avant du panneau ; et
un système de réglage de phase électromécanique, comprenant :
un premier dispositif de réglage de phase mécanique (200) situé sur la face arrière du panneau ;
ledit premier dispositif de réglage de phase (200) comprenant une première ligne de transmission (240) présentant une configuration en arc de cercle couplée au niveau des extrémités opposées au premier (110) et au deuxième (150) éléments d'antenne, et un premier balai mobile conducteur de signaux (250) configuré pour balayer ladite première ligne de transmission (240) en raccourcissant de ce fait le trajet des signaux vers l'un dudit premier (110) et dudit deuxième (150) éléments d'antenne tout en rallongeant le trajet vers les autres desdits éléments d'antenne ;
un second dispositif de réglage de phase mécanique (210) situé sur la face arrière du panneau ;
ledit second dispositif de réglage de phase (210) comprenant une seconde ligne de transmission (360) présentant une configuration en arc de cercle couplée au niveau des extrémités opposées au troisième (120) et au quatrième (140) éléments d'antenne, et un second balai mobile conducteur de signaux (350) configuré pour balayer ladite seconde ligne de transmission (360) en raccourcissant de ce fait le trajet des signaux vers l'un dudit troisième (110) et dudit quatrième (150) éléments d'antenne tout en rallongeant le trajet vers les autres desdits éléments d'antenne ;
un moteur supporté par ledit panneau sous lesdits premier et second dispositifs de réglage de phase (200, 210) ;
une tringlerie mécanique qui relie ledit moteur audit premier (250) et audit second (350) balais, ladite tringlerie comprenant un élément allongé (500, 500a) entre ledit moteur et lesdits premier (250) et second (350) balais mobiles et couplée à au moins un bras de balai monté de manière pivotante (510, 520) supportant au moins l'un desdits premier (250) et second (350) balais mobiles de telle sorte que l'activation dudit moteur provoque le déplacement dudit éléments allongé (500, 500a) dans la direction de la longueur le long dudit panneau, le balayage simultané en arc de cercle desdits premier (250) et second (350) balais sur lesdites lignes de transmission (240, 360), et la modification du site fixe du faisceau en relation avec la direction et la grandeur du déplacement dudit élément allongé (500, 500a) ; et
un système de commande de site de faisceau, comprenant :
un dispositif de commande de moteur (630) situé à distance de ladite antenne et couplé audit moteur ;
ledit dispositif de commande de moteur (630) étant configuré de manière à transmettre des commandes de site de faisceau audit moteur et à procéder de ce fait à des réglages de site de faisceau.

24. Antenne selon la revendication 23, dans laquelle l'un desdits premier (250) et second (350) balais se déplace deux fois jusqu'à l'autre desdits balais lorsque ledit élément allongé (500, 500a) est déplacé.

25. Antenne selon la revendication 23 ou la revendication 24, comprenant en outre une tringlerie (520) qui interconnecte lesdits premier (250) et second (350) balais.

26. Antenne selon l'une quelconque des revendications 23 à 25, dans laquelle ladite tringlerie convertit un déplacement rotatif du moteur en un déplacement linéaire de l'élément allongé (500, 500a).

27. Antenne selon l'une quelconque des revendications 23 à 26, dans laquelle ledit système de commande de site de faisceau inclut un identificateur de position de faisceau (704) auquel est sensible ledit dispositif de commande de moteur (630).

28. Antenne selon l'une quelconque des revendications 23 à 27, dans laquelle ledit élément allongé (500) présente une extrémité à proximité d'un bord inférieur dudit panneau.

29. Antenne selon la revendication 28 dans laquelle ladite extrémité dudit élément allongé (500) est apte, en premier lieu, à faciliter la manoeuvre manuelle dudit élément allongé de manière à régler le site du faisceau, et, en second lieu, à faciliter la connexion dudit moteur à ladite antenne pour un réglage électrique à distance du site du faisceau.

30. Antenne selon la revendication 28 ou la revendication 29, dans laquelle ladite extrémité comprend un écrou d'accouplement fileté (600) à travers lequel ledit élément allongé (500) s'étend pour une connexion audit moteur.

31. Antenne selon l'une quelconque des revendications 23 à 30, dans laquelle ledit élément allongé (500) comprend un repère (535) qui fournit une indication du site du faisceau sur la base de la position de l'élément allongé (500).

32. Antenne selon l'une quelconque des revendications 23 à 31, dans laquelle ledit élément allongé (500) est composé de matière plastique.

33. Antenne selon l'une quelconque des revendications 23 à 32, dans laquelle ledit moteur est apte à être déplacé vers ledit panneau de manière à être suspendu sous ledit panneau de manière à faciliter l'installation.

34. Antenne selon l'une quelconque des revendications 23 à 33, dans laquelle ledit moteur est configuré de manière à être déplacé dans ledit système de réglage de phase électromécanique.

35. Antenne de station de base cellulaire selon la revendication 1, dans laquelle ledit actionneur mécanique (500, 500a) est configuré dans un premier lieu pour un réglage manuel du site du faisceau, et dans un second lieu, pour une fixation sélective d'un actionneur électrique (660) pour un réglage électrique à distance de site de faisceau.

36. Antenne selon la revendication 35, dans laquelle ledit actionneur mécanique (500, 500a) présente une extrémité sous un bord dudit panneau, ladite extrémité étant configurée pour un réglage manuel de site de faisceau, et pour une fixation dudit actionneur électrique (660).

37. Antenne selon la revendication 36, dans laquelle ladite extrémité comprend un écrou fileté (600) avec une ouverture à travers laquelle passe un élément allongé (500) qui s'étend vers ledit dispositif de réglage de phase (200, 210) et est entraîné par ledit actionneur électrique (660).

38. Antenne selon la revendication 37, dans laquelle ledit élément allongé (500) comprend un repère (535) qui fournit une indication du site du faisceau sur la base de la position de l'élément allongé (500).

39. Antenne selon l'une quelconque des revendications 35 à 38, comprenant une pluralité de dispositifs de réglage de phase espacés, et dans laquelle ledit actionneur mécanique inclut un élément allongé (500a) qui s'étend dans la direction de longueur le long dudit panneau et est couplé auxdits dispositifs de réglage de phase pour une manoeuvre simultanée manuelle ou électrique de chacun d'eux.
